# FASCICULE DE BREVET EUROPEEN

(11) **EP 2 215 534 B1**
(45) Date de publication et mention de la délivrance du brevet: **05.12.2012**
(21) Numéro de dépôt: 08840295.3
(22) Date de dépôt: 17.10.2008
(51) Int. Cl.: G05B 19/042

(54) **PROCEDE DE FONCTIONNEMENT D'UNE INSTALLATION DOMOTIQUE POUR EVALUER L'IMPACT ENERGETIQUE D'ACTIONS D'UN EQUIPEMENT DOMOTIQUE SUR UN LOCAL**
VERFAHREN ZUM BETRIEB EINER HEIMAUTOMATISIERUNGSINSTALLATION ZUR EVALUIERUNG DER ENERGIEAUSWIRKUNG VON AKTIONEN EINER HEIMAUTOMATISIERUNGSVORRICHTUNG AN EINEM STANDORT
METHOD OF OPERATION OF A HOME-AUTOMATION INSTALLATION FOR EVALUATING THE ENERGY IMPACT OF ACTIONS OF A HOME-AUTOMATION APPARATUS ON A PREMISES

(30) Priorité: 18.10.2007 FR 0707316
(43) Date de publication de la demande: 11.08.2010
(73) Titulaire: Somfy SAS, 74300 Cluses (FR)
(72) Inventeur: DUCHAMP, Lionel, F-74540 Gruffy (FR)
(74) Mandataire: Bugnion Genève
(86) Numéro de dépôt international: PCT/IB2008/054267
(87) Numéro de publication internationale: WO 2009/050674

(56) Documents cités:
- US-A- 5 696 695
- US-A- 6 108 614
- US-A1- 2005 090 915

## Description

L'invention concerne les installations domotiques, en particulier dans l'habitat résidentiel. De telles installations comprennent différents équipements électriques tels que des écrans de protection solaire, des volets roulants, des systèmes d'éclairage, de chauffage, de ventilation ou de climatisation, qu'il est possible de piloter individuellement, par groupes ou dans leur ensemble.

Une commande optimisée de certains groupes de ces équipements électriques permet de réduire la consommation énergétique d'un local tout en apportant du confort à l'occupant. En particulier, l'utilisation de dispositifs de détection de paramètres environnants ou capteurs permet de commander des actions de chaque équipement électrique, sur la base des données fournies par ces capteurs afin d'optimiser le confort et de limiter la consommation énergétique au maximum.

Par exemple, les protections solaires sont automatiquement fermées si l'intensité lumineuse détectée sur une façade et la température intérieure de la pièce sont au-dessus de valeurs seuil prédéterminées.

Cependant, l'automatisation complète d'un local conduit souvent à des plaintes des occupants dans la mesure où leurs souhaits sont régulièrement en conflit avec les algorithmes de commande de l'installation domotique.

Une solution connue à ce problème est décrit dans le brevet FR 2 771 521, dans lequel une commande est exécutée en une première manoeuvre, puis interrompue, de manière à laisser à l'occupant une occasion éventuelle d'agir localement pour infirmer la commande automatique. L'automatisme prend en compte une telle réaction de l'utilisateur pour mettre à jour ses paramètres de fonctionnement futur.

Bien entendu, la commande locale des équipements électriques de l'habitat ou d'une pièce occupée peut augmenter la satisfaction des occupants par rapport à une solution d'automatisation complète. Cependant, le comportement de l'occupant peut interférer avec les objectifs d'économie d'énergie mis en oeuvre par cette automatisation.

On connaît du brevet US 5,696,695 un système permettant de suivre la consommation énergétique de dispositifs consommant de l'énergie électrique dans un réseau. L'utilisateur peut demander à un programme combien aurait pu être économisé en faisant fonctionner un des dispositifs selon une autre plage horaire, le calcul s'appuyant sur l'historique des consommations.

Le but de l'invention est de fournir un procédé de fonctionnement d'une installation domotique obviant aux inconvénients cités précédemment et améliorant les procédés de fonctionnement connus de l'art antérieur. En particulier, l'invention propose un procédé de fonctionnement permettant d'optimiser à la fois la consommation énergétique d'un local et le confort des occupants notamment en autorisant des commandes locales tout en continuant à suivre une logique de commande pour optimiser la consommation énergétique et/ou les coûts relatifs à cette consommation.

Le procédé selon l'invention est défini par la revendication 1.

Différents modes d'exécution du procédé sont définis par les revendications dépendantes 2 à 13.

Une installation domotique selon l'invention est définie par la revendication 14.

Un mode de réalisation de l'installation est défini par la revendication 15.

Le dessin annexé représente, à titre d'exemples, un mode de réalisation d'une installation domotique et un mode d'exécution du procédé de fonctionnement selon l'invention.
La figure 1 est un schéma d'un mode de réalisation d'une installation domotique selon l'invention.
La figure 2 est un schéma illustrant une première phase du procédé de fonctionnement selon l'invention.
La figure 3 est un schéma illustrant une deuxième phase du procédé de fonctionnement selon l'invention.
La figure 4 est un schéma représentant un exemple d'affichage d'une unité de commande d'une installation domotique selon l'invention.

Dans d'autres domaines industriels, notamment dans l'automobile haut de gamme (Toyota Prius, Audi Q7) ou dans des systèmes liés à la production, distribution ou consommation d'électricité, il est connu de prévoir des moyens qui permettent de visualiser la consommation énergétique instantanée ou réalisée sur une période donnée. Cependant, une caractéristique commune de ces systèmes est leur intégration industrielle totale, dans la mesure où l'industriel constructeur est le seul maître d'oeuvre ou bénéficie d'une filière intégrée, comme le fournisseur d'électricité. Dans l'habitat, des systèmes similaires sont proposés, permettant de visualiser la consommation électrique instantanée dans l'habitat. Cette information est simplement fournie à l'occupant. Aucun système rassemblant différents équipements et évaluant leur impact énergétique global n'existe.

Une installation domotique selon l'invention permet la commande locale par les occupants et la commande automatique des équipements électriques de l'installation. Une unité de commande de l'installation selon l'invention évalue différentes actions sur les équipements électriques, qu'elles soient sur requête d'un utilisateur ou non, et évalue l'impact (de chacune des actions individuellement en fixant des conditions ou de toute combinaison de ces actions) sur la consommation énergétique globale de l'installation, dans l'hypothèse où ces actions ou combinaisons d'actions seraient exécutées. Ainsi, l'état énergétique du local est simulé dans l'hypothèse où une action ou une combinaison d'actions était exécutée. Elle en déduit des actions à impact positif, qui permettent de réduire la consommation énergétique ou de favoriser les énergies écologiques ou financièrement avantageuses et des actions à impact négatif ayant l'effet inverse. Suite à ces évaluations, elle affiche et recommande par l'intermédiaire d'une interface homme-machine, les actions ou combinaisons d'actions ayant un impact positif sur la consommation (c'est-à-dire permettant de diminuer celle-ci). Cependant, l'unité de commande de l'installation n'exécute pas nécessairement ces actions ou ces combinaisons automatiquement. Elle peut conserver une fonction de conseil, permettant à l'utilisateur de décider, sur la base de ces conseils, quelles sont les actions les plus appropriées à mettre en oeuvre ou quelles sont la ou les actions qu'il préfère mettre en oeuvre. Cette fonction de conseil sans exécution automatique peut être mise en oeuvre dans un mode manuel en opposition à un mode automatique dans lequel les actions sont mises en oeuvre automatiquement et dans lequel leur impact énergétique est également affiché automatiquement.

L'utilisateur décide dans ce mode manuel d'activer ou non les actions recommandées par l'unité de commande.

Dans un deuxième mode d'exécution, l'unité de commande peut également évaluer et informer l'utilisateur de l'impact énergétique prévu d'une action qu'il a sélectionnée, avant exécution de celle-ci. En fonction du résultat de l'évaluation, l'utilisateur peut ainsi décider, en toute connaissance, de faire exécuter ou non l'action prévue, selon ses préférences.

Ainsi, la satisfaction et le confort de l'occupant et la réduction de la consommation énergétique sont pris en compte dans l'installation domotique selon l'invention.

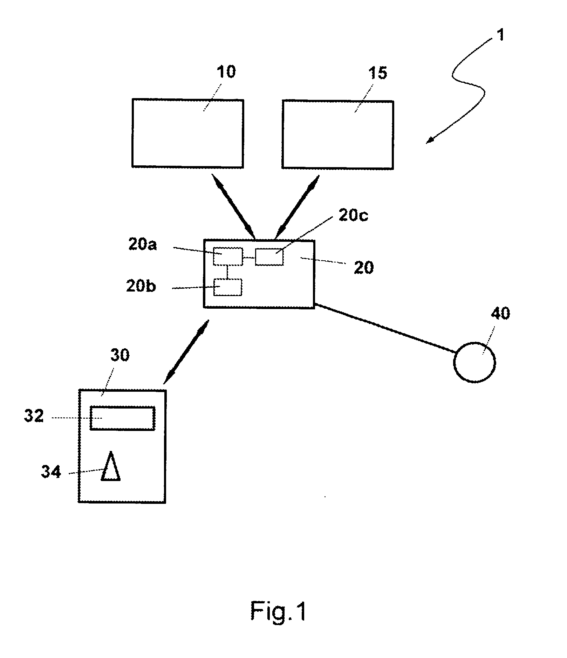

Une installation domotique 1 selon l'invention est représentée à la figure 1. Elle permet de mettre en oeuvre les logiques exposées précédemment. Elle comprend une pluralité d'éléments ou équipements électriques domotiques 10, 15 tels que par exemple un volet roulant, une serrure motorisée, un store de terrasse, un store d'intérieur à lames orientables, une lampe, un radiateur, un actionneur de fenêtre, etc.

Ces équipements sont commandés électriquement ou même peuvent contenir un moteur (on peut parler généralement d'électro-mécanismes) de sorte qu'il est possible de les activer/désactiver en utilisant une unité de commande 20. Les équipements peuvent être alimentés sur le secteur ou par des moyens séparés d'alimentation et sont alors dits équipements autonomes.

L'unité de commande 20 permet de commander à distance les différents équipements électriques de l'installation. A cet effet, elle comprend une interface homme-machine 30 munie d'au moins un écran de visualisation 32 et de touches de commande 34. L'écran de visualisation peut être constitué d'un écran à cristaux liquides ou à rétro-éclairage, permettant l'affichage de caractères alphanumériques, ou d'une pluralité de diodes électroluminescentes. L'interface homme-machine peut être celle d'un ordinateur auquel est connectée l'unité de commande.

La commande locale des équipements est également possible par l'intermédiaire d'interrupteurs locaux ou directement depuis l'unité de commande, par l'intermédiaire des touches de commande.

L'unité de commande comprend un microprocesseur 20a, une mémoire 20b et une unité de communication 20c lui permettant de dialoguer et d'envoyer des ordres de commande vers les différents équipements, de recevoir des informations en provenance de ces équipements ou d'autres éléments de l'installation domotique. Les communications entre les différents éléments de l'installation domotique peuvent être unidirectionnelles ou bidirectionnelles, filaires ou non. Des liaisons de communication bidirectionnelles entre les équipements et l'unité de commande permettent à celle-ci notamment de connaître l'état des différents équipements.

L'unité de commande peut également être alimentée sur le secteur ou par des moyens séparés d'alimentation. L'interface homme-machine de l'unité de commande peut également être une entité séparée de l'unité de commande, par exemple une station portable munie de sa propre source d'alimentation et communiquer avec l'unité de commande par des moyens de communications non filaire.

L'installation comprend également des dispositifs de détection 40 comprenant des capteurs fournissant à l'unité de commande et/ou aux équipements, l'état ou la mesure de paramètres environnants ou de paramètres de fonctionnement des équipements électriques.

Ces paramètres environnants consistent notamment en des paramètres à l'intérieur et à l'extérieur du local, par exemple la présence d'un occupant, la température ou le taux de CO₂ dans une pièce, l'éclairement d'une façade ou d'une fenêtre, l'humidité ambiante, la luminosité sur une surface de travail tel qu'un bureau.

Les paramètres de fonctionnement des équipements peuvent consister en l'état (ouvert/fermé, allumé/éteint, en cours de mouvement) de ces équipements, une information de diagnostic (par exemple dans le cas d'un mauvais fonctionnement, d'un conflit de commande, de la présence d'un obstacle) ou d'autres informations liées à l'activation des équipements, comme par exemple une information de temps provenant d'une horloge.

La communication entre les dispositifs de détection et l'unité de commande peut également être unidirectionnelle ou bidirectionnelle, filaire ou non. Certains des dispositifs de détection peuvent être intégrés dans l'unité de commande.

En dehors de l'information fournie par les dispositifs de détection, l'unité de commande peut prendre en compte d'autres données qui peuvent être entrées au niveau de l'unité de commande une fois ou de manière répétée. Ceci peut être réalisé par l'intermédiaire de l'interface homme-machine ou par l'intermédiaire d'une interface réseau incorporée dans l'unité de commande. Ces données sont typiquement des données relatives au local (orientation, localisation géographique, propriétés d'isolation, dimensions, géométrie, etc), des paramètres de configuration

(date et heure, seuils pour divers paramètres, scénarios de pilotage des équipements, souhaits de confort, etc).

Des informations climatiques reçues par une liaison Internet sont des exemples de paramètres entrés de manière répétée.

L'unité de commande et l'installation domotique comprennent des moyens logiciels pour mettre en oeuvre le procédé de fonctionnement selon l'invention. Ces moyens logiciels comprennent notamment des programmes informatiques régissant le fonctionnement de l'unité de commande et de l'installation. En particulier, l'installation domotique comprend un moyen de calcul et/ou de simulation permettant de prévoir l'impact énergétique d'au moins une première action d'un équipement domotique sur le bilan énergétique du local équipé de l'installation dans l'hypothèse où cette action serait exécutée et un moyen de conseil permettant de recommander ou de déconseiller à l'utilisateur de mettre en oeuvre la première action. Le moyen de conseil peut comprendre toute interface de signalisation, notamment de type sonore ou visuel. De préférence, ces moyens font partie de l'unité de commande.

Ainsi, l'unité de commande peut disposer de moyens de calculs et de simulation de l'impact énergétique des actions des différents équipements dans l'habitat. Pour le calcul d'impact, elle s'appuie notamment sur un certain nombre de données fournies par le constructeur de l'habitat :
- type de construction,
- orientation du local,
- matériaux de construction,
- isolations utilisées,
incluant les performances énergétiques de chaque composant, données régies par des normes et règlements précis ; ou même sur des études thermiques réalisées avant ou après la construction du local par des bureaux d'études spécialisés.

L'impact énergétique est également fonction des énergies utilisées dans l'habitat :
- type d'énergie de chauffage ou de production d'eau chaude (bois, électrique, fuel, gaz, photovoltaïque, etc)
- type de conversion de l'énergie en chauffage (radiateurs radiants/à convection, en fonte ou aluminium, dalle chauffante, cheminée, etc)
- abonnements aux fournisseurs d'énergie, y compris tarification heures pleines/heures creuses, etc.

Les diverses informations énergétiques peuvent être directement fournies à l'unité de commande par certains équipements pour lesquels le constructeur a programmé l'intégration et la restitution de telles données. Alternativement, ces données sont lisibles (sous forme d'information de type RFID ou code barre) sur l'équipement.

Un paramétrage précis complète la configuration du local, notamment le dimensionnement et les caractéristiques des produits à impact énergétique actif ou passif. Par exemple, cet impact énergétique est basé sur les consommations et/ou les gains énergétiques théoriques, constatés ou moyens des différents équipements.

La configuration de l'installation domotique comprend également la définition d'un état d'équilibre du local, dans lequel des valeurs optimales de confort sont définies. Ces valeurs optimales de confort sont alors choisies comme valeurs seuils. De préférence, l'unité de commande est programmée pour chercher à atteindre cet état d'équilibre en minimisant la consommation énergétique.

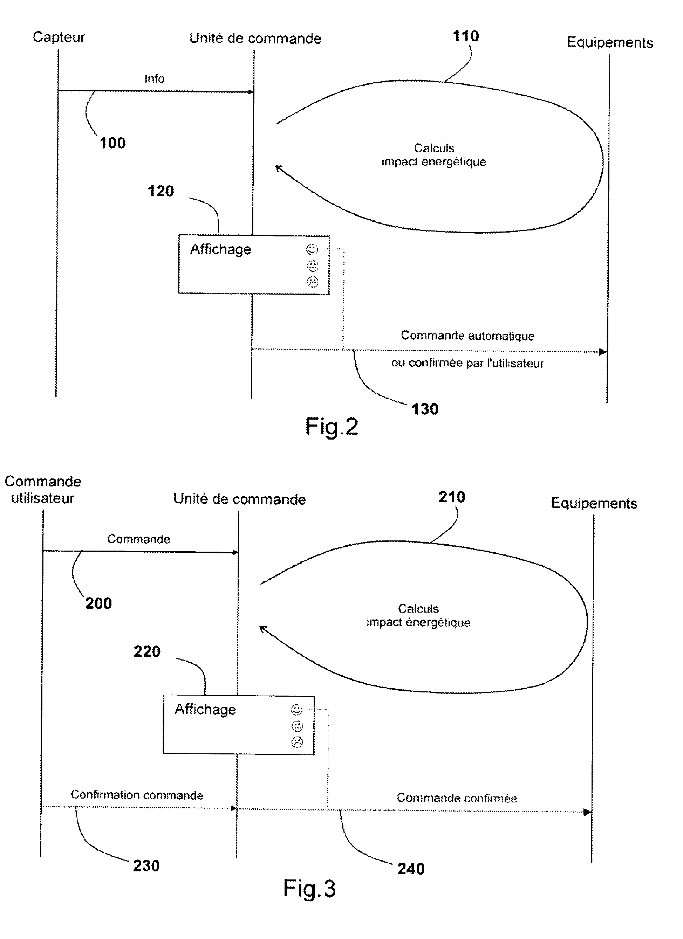

L'unité de commande ainsi configurée, permet d'estimer et de calculer la consommation énergétique du local associé, et en particulier, permet d'évaluer l'impact énergétique de diverses actions des équipements électriques. Différentes étapes liées à l'invention sont schématisées sur la figure 2.

Dans une première étape 100, un capteur envoie à l'unité de commande une information liée au paramètre qu'il mesure. Cette information peut être une simple indication traduisant le niveau de mesure du paramètre ou un ordre de commande associé à ce niveau de mesure.

Dès réception de cette information, une étape de calculs 110 est effectuée. Cette étape de calculs a pour but de mettre à jour le modèle utilisé pour calculer l'impact énergétique de l'exécution d'un ou plusieurs ordres de commande. Ces calculs sont des calculs de simulation ou de prévision de ce que serait l'impact énergétique de la ou des commandes dans l'hypothèse où celles-ci seraient exécutées. Le calcul d'impact énergétique peut se limiter à de simples comparaisons entre des valeurs fournies par un ou plusieurs capteurs et des seuils préenregistrés.

Dans une étape 120, l'unité de commande affiche le type d'ordres de commande évalués et leur impact énergétique, en particulier ceux ayant un impact positif.

Dans une étape 130, l'exécution d'un ou plusieurs ordres de commande est confirmée par l'unité de commande, soit parce que l'utilisateur a validé leur exécution après avoir été informé de son impact énergétique soit automatiquement parce que l'impact énergétique conduit à une consommation énergétique réduite de l'installation équipant le local tout en restant dans des critères de confort prédéfinis. De préférence, un seuil de consommation énergétique est prédéfini pour juger de l'importance de cette réduction de consommation énergétique.

L'évaluation peut être générée de manière proactive, c'est-à-dire sans nécessairement que celle-ci soit requise par l'utilisateur. Elle peut avoir lieu suite à un apprentissage, au cours duquel les actions sont mises en oeuvre, leur impact mesuré et mis en mémoire pour la gestion proactive d'une situation future.

De manière similaire à l'exemple présenté en figure 2, une nouvelle évaluation peut être réalisée de manière répétitive, après qu'une période donnée se soit écoulée ou sur requête d'un utilisateur, par exemple une requête de mise à jour ou une commande.

En comparant ces évaluations relatives à diverses actions et/ou divers équipements, l'unité de commande est capable de déterminer les actions les plus intéressantes dans un but de réduction globale d'énergie consommée et/ou favorisant les énergies écologiques et/ou financièrement avantageuses. Enfin, l'unité de commande permet de proposer à l'utilisateur une restitution graphique et claire des estimations, prospections et calculs, essentiellement dans un but d'information et de recommandation ou de conseil.

L'unité de commande peut également afficher les diverses évaluations et leur nature, positive, négative ou neutre, selon si elles conduisent respectivement à une augmentation, une diminution ou une stagnation des performances énergétiques de l'installation.

Avantageusement, ces recommandations ou conseils se présentent sous forme graphique en utilisant l'écran de visualisation de l'interface homme-machine de l'unité de commande. De telles recommandations peuvent prendre la forme de texte et d'icônes, proposant par exemple de fermer tel store devant une fenêtre située au Sud, d'ouvrir telle fenêtre sur une façade Est pour assurer une ventilation naturelle, de baisser le thermostat de tel chauffage ou l'ouverture d'un volet combinée à l'extinction d'une lumière électrique dans la même pièce.

La visualisation peut simplement indiquer l'action recommandée, mais elle peut aussi inclure un chiffrage de l'impact énergétique en termes d'économies d'énergie ou même d'économies financières.

Les recommandations ou conseils peuvent être un simple listing d'actions, triées selon leur intérêt, ou une simple action évaluée ou notée de manière à faire apparaître un score permettant de quantifier ou qualifier l'intérêt énergétique de l'action.

Les recommandations ou conseils peuvent aussi porter sur l'aménagement du local. Ainsi, un remplacement d'un dispositif de l'installation domotique par un autre offrant des caractéristiques différentes peut être proposé. Par exemple, il peut être proposé de remplacer un premier dispositif de protection solaire par un autre présentant d'autres caractéristiques ou d'équiper des vitrages non encore protégés avec des dispositifs de protection solaire.

Après visualisation des actions recommandées, l'utilisateur a la possibilité de mettre en oeuvre ces actions en pilotant directement les équipements électriques depuis l'interface homme-machine de l'unité de commande.

De même, l'occupant a la possibilité de désapprouver l'action recommandée. De nouvelles estimations et calculs peuvent alors être mis en oeuvre en tenant compte de la réaction de l'utilisateur.

De préférence, lorsqu'une nouvelle action avec un fort impact énergétique est recommandée, ou si une action est recommandée pendant une période donnée sans action de l'utilisateur, un message visuel ou sonore particulier peut être ajouté aux ergonomies d'affichage pour bien informer l'utilisateur. A l'issue d'une temporisation sans action de l'utilisateur, l'action peut être mise en oeuvre de manière automatique. Un affichage particulier est prévu également lorsqu'aucune action particulière n'est spécifiquement recommandée, c'est-à-dire si l'installation est dans l'état d'équilibre tel qu'il a été défini.

L'unité de commande peut également commander certaines actions de manière automatique, en particulier dans le cas d'actions liées à la sécurité des équipements et des personnes, ou d'actions à impact énergétique fort en l'absence de réaction de l'utilisateur. Par ailleurs, l'utilisation d'un dispositif de détection de présence peut également faire basculer l'unité de commande en mode automatique lorsque personne n'est dans le local ou dans une pièce du local, et en mode manuel lorsqu'un occupant est détecté, la fonction de prévision de l'impact énergétique étant conservée dans les deux cas.

L'unité de commande peut également alerter en cas de consommation inhabituelle par rapport à un bilan journalier moyen, dans le cas d'un appareil anormalement allumé ou d'un produit resté en veille entre autres exemples.

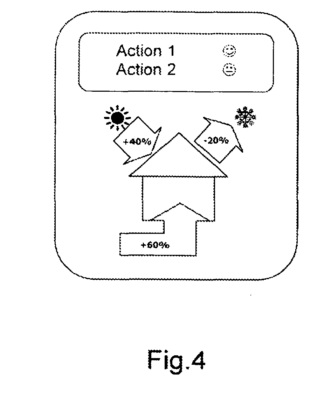

Une utilisation supplémentaire de l'unité de commande est la représentation visuelle des gains et pertes énergétiques en moyenne sur une période donnée dans le local concerné. Ces gains et pertes sont calculés à partir des informations de configuration du système et des données mesurées. Un exemple d'affichage est représenté en figure 4. Ainsi, l'habitant peut avoir une information sur la balance énergétique et un chiffrage de celle-ci, adapté à son habitat (par exemple sur la figure 4, en pourcentage économisés/consommés depuis une certaine date). D'autres paramètres que ceux ayant un impact direct sur les équipements peuvent être inclus dans ce bilan énergétique : ce peut être le cas de l'eau par exemple. L'information fournie est alors un bilan physique et financier lié au local sur une période donnée.

Un deuxième mode de réalisation, complémentaire du premier et pouvant parfaitement être combiné à celui-ci, est décrit ci-après en référence à la figure 3.

Dans une première étape 200, l'unité de commande réagit à une commande d'un utilisateur pour actionner un équipement électrique, par activation d'une des touches de commande de l'interface homme-machine. L'utilisateur souhaite par exemple ouvrir une fenêtre ou remonter un store.

Dans une étape 210, l'unité de commande évalue alors l'impact énergétique de l'action sur la consommation énergétique du local, c'est-à-dire, la consommation d'énergie ou inversement la production d'énergie, par exemple thermique, relativement à l'état d'équilibre défini. Ce calcul est un calcul de simulation ou de prévision de ce que serait l'impact énergétique de la commande dans l'hypothèse où celle-ci serait exécutée.

Dans une étape 220, si l'impact est négatif, c'est-à-dire si la consommation d'énergie estimée résultant de cette action augmente par rapport à la consommation actuelle, l'unité de commande émet un message d'alerte sur l'écran de visualisation. L'utilisateur est alors informé que l'action qu'il souhaite mettre en oeuvre est défavorable énergétiquement. Le message d'alerte peut, de même que dans le premier mode de réalisation, inclure un chiffrage de la consommation ou de l'impact financier.

L'utilisateur doit alors, dans une étape 230, confirmer sa commande, s'il souhaite qu'elle soit tout de même exécutée.

Si tel est le cas, l'unité de commande confirme l'émission de l'ordre de commande dans une étape 240.

Ce message d'alerte et/ou la confirmation de commande peuvent être actifs pour toutes les actions résultant en une augmentation de la consommation énergétique ou pour les seules actions qui résultent en une augmentation de consommation au-dessus d'un seuil prédéfini. En deçà de ce seuil, seul un message défavorable peut être affiché le cas échéant, mais la commande peut être prise en compte dès la première activation.

Au-delà d'un second seuil de consommation, l'unité de commande peut également inhiber certaines actions totalement défavorables et informer l'utilisateur que celles-ci ne peuvent être exécutées du fait de leur impact énergétique négatif.

Dans les deux modes de réalisation, les évaluations de l'impact énergétique de certaines actions tiennent compte des réactions éventuelles de l'utilisateur vis-à-vis des actions recommandées. L'installation se réajuste ainsi de manière dynamique, en tenant compte du local, des occupants de celui-ci et des éléments passifs ou actifs sur le plan énergétique, à partir d'une évaluation théorique tenant compte des éléments de configuration vers une évaluation pratique tenant compte également du mode de vie des occupants.

De manière avantageuse également, l'installation remet à jour ses paramètres, régulièrement ou sur événement particulier, pour tenir compte par exemple de l'introduction d'un nouvel équipement dans l'installation et des nouvelles interactions que celui-ci crée avec le reste de l'installation.

Dans la présente demande le terme local a été utilisé et signifie tout ou partie d'un bâtiment d'habitation ou commercial ou de bureaux. Il peut en particulier désigner une maison individuelle, un appartement d'un immeuble d'habitation collective ou un immeuble d'habitation collective.

Une action peut avoir plusieurs composantes. Par exemple, il peut s'agir d'un scénario dans lequel tous les volets du local sont manoeuvrés. De même, l'action peut être relative à différents équipements de natures différentes, notamment il peut s'agir d'une manoeuvre des volets et d'un changement d'état d'un système d'éclairage et/ou de chauffage et/ou de climatisation.

## Revendications

1. Procédé de fonctionnement d'une installation (1) domotique équipant un local et comprenant au moins un équipement domotique (10, 15) commandé par l'intermédiaire d'une unité de commande (20), **caractérisé en ce qu'**il comprend une étape de définition d'un état d'équilibre du local dans lequel des valeurs optimales de confort sont définies, une étape de prévision de l'impact énergétique d'au moins une première action de l'équipement domotique sur le bilan énergétique du local dans l'hypothèse où cette action serait exécutée et une étape de conseil au cours de laquelle l'installation recommande ou déconseille à l'utilisateur de mettre en oeuvre la première action, l'unité de commande étant programmée pour chercher à atteindre l'état d'équilibre en minimisant la consommation énergétique.

2. Procédé de fonctionnement selon la revendication 1, **caractérisé en ce que** l'étape de prévision comprend une détermination de l'impact de la première action de l'équipement domotique sur la consommation énergétique du local.

3. Procédé de fonctionnement selon l'une des revendications précédentes, **caractérisé en ce qu'**il comprend une étape d'information au cours de laquelle l'installation informe de l'impact énergétique de la première action sur le bilan énergétique du local.

4. Procédé de fonctionnement selon la revendication 3, **caractérisé en ce que** l'étape d'information comprend une restitution graphique de l'impact énergétique de la première action, éventuellement accompagnée d'une information traduisant la nature positive ou négative de l'impact énergétique de la première action.

5. Procédé de fonctionnement selon la revendication 3 ou 4, **caractérisé en ce que** l'étape d'information comprend une information de gain énergétique et/ou de gain financier relative à l'exécution de la première action.

6. Procédé de fonctionnement selon l'une des revendications 3 à 5, **caractérisé en ce que** l'étape d'information comprend une information, éventuellement sous forme graphique, des gains et pertes énergétiques du local sur une période donnée.

7. Procédé de fonctionnement selon l'une des revendications précédentes, **caractérisé en ce qu'**il comprend une étape de prévisions des impacts énergétiques de plusieurs actions de l'équipement domotique ou de plusieurs équipements domotiques sur le bilan énergétique du local dans les hypothèses où ces actions seraient exécutées individuellement ou en combinaison.

8. Procédé de fonctionnement selon la revendication précédente, **caractérisé en ce qu'**il comprend une étape de conseil au cours de laquelle l'installation recommande ou déconseille à l'utilisateur de mettre en oeuvre une ou plusieurs actions ou combinaisons d'actions.

9. Procédé de fonctionnement selon l'une des revendications précédentes, **caractérisé en ce que** l'étape de conseil intègre une phase d'apprentissage automatique des habitudes de l'utilisateur et tient compte des réactions passées de l'utilisateur vis-à-vis des actions recommandées.

10. Procédé de fonctionnement selon l'une des revendications précédentes, **caractérisé en ce que** l'étape de prévision fait suite à une émission d'une requête d'exécution de la première action.

11. Procédé de fonctionnement selon la revendication précédente, **caractérisé en ce que** la requête d'exécution de la première action n'est pas prise en compte s'il est prévu que la première action entraîne une consommation d'énergie supérieure à un seuil prédéterminé.

12. Procédé de fonctionnement selon l'une des revendications précédentes, **caractérisé en ce qu'**il comprend une étape préalable de configuration dans laquelle des données relatives au local, à l'équipement ou aux équipements et à l'impact énergétique actif ou passif de ce ou ces équipements sont enregistrées par un installateur et/ou automatiquement apprises.

13. Procédé de fonctionnement selon la revendication précédente, **caractérisé en ce que** l'étape préalable de configuration comprend une phase d'enregistrement de valeurs optimales de paramètres de confort.

14. Installation domotique (1) équipant un local et comprenant au moins un équipement domotique (15, 20) commandé par l'intermédiaire d'une unité de commande (20), **caractérisée en ce qu'**elle comprend des moyens matériels (20a, 20b, 20c, 30, 40) et des moyens logiciels de mise en oeuvre du procédé de fonctionnement selon l'une des revendications précédentes.

15. Installation domotique selon la revendication 14, **caractérisée en ce qu'**elle comprend un ensemble de capteurs (40), le ou les équipements domotiques, l'unité de commande et l'ensemble de capteurs communiquant entre eux de manière à échanger des informations et/ou à transmettre des ordres de commande, l'unité de commande étant munie par ailleurs d'une interface homme-machine (30).

## Claims

1. A method of operating a home automation installation (1) equipping premises and comprising at least one piece of home automation equipment (10, 15) controlled using a control unit (20), **characterized in that** it comprises a step for defining a state of equilibrium of the premises in which optimal comfort values are defined, a step for anticipating the energy impact of at least one first action of the piece of home automation equipment on the energy balance of the premises in the event that action is carried out, and a recommendation step during which the installation recommends or discourages the user from carrying out the first action, the control unit being programmed to try to achieve the state of equilibrium while minimizing energy consumption.

2. The operating method according to claim 1, **characterized in that** the anticipation step comprises determining the impact of the first action of the piece of home automation equipment on the energy consumption of the premises.

3. The operating method according to one of the preceding claims, **characterized in that** it comprises an information step during which the installation provides information on the energy impact of the first action on the energy balance of the premises.

4. The operating method according to claim 3, **characterized in that** the information step comprises a graphic representation of the energy impact of first action, possibly accompanied by information demonstrating the positive or negative nature of the energy impact of the first action.

5. The operating method according to claim 3 or 4, **characterized in that** the information step comprises energy savings and/or financial savings information relative to carrying out the first action.

6. The operating method according to one of claims 3 to 5, **characterized in that** the information step comprises information, possibly in graphic form, on the energy gains and losses of the premises over a given period.

7. The operating method according to one of the preceding claims, **characterized in that** it comprises a step for anticipating the energy impact of several actions of the piece of home automation equipment or of several pieces of home automation equipment on the energy balance of the premises in the event those actions were to be carried out individually or in combination.

8. The operating method according to the preceding claim, **characterized in that** it comprises a recommendation step during which the installation recommends or discourages the user from carrying out one or more actions or combinations of actions.

9. The operating method according to one of the preceding claims, **characterized in that** the recommendation step incorporates an automatic learning phase for learning the user's habits, and takes the user's past reactions to the recommended actions into account.

10. The operating method according to one of the preceding claims, **characterized in that** the anticipation step follows the issue of a request to carry out the first action.

11. The operating method according to the preceding claim, **characterized in that** the request to carry out the first action is not taken into account if it is provided that the first action causes energy consumption above a predetermined threshold.

12. The operating method according to one of the preceding claims, **characterized in that** it comprises a prior configuration step in which the data relative to the premises, to the piece of equipment or to the pieces of equipment, and to the active or passive energy impact of that or those piece(s) of equipment are recorded by an installer and/or learned automatically.

13. The operating method according to the preceding claim, **characterized in that** the prior configuration step comprises a phase for storing optimal values of comfort parameters.

14. A home automation installation (1) equipping premises and comprising at least one piece of home automation equipment (15, 20) controlled using a control unit (20), **characterized in that** it comprises hardware means (20a, 20b, 20c, 30, 40) and software means for implementing the operating method according to one of the preceding claims.

15. The home automation installation according to claim 14, **characterized in that** it comprises a set of sensors (40), the piece(s) of home automation equipment, the control unit and the set of sensors communicating with each other so as to exchange information and/or transmit control orders, the control unit also being provided with a man-machine interface (30).

## Patentansprüche

1. Betriebsverfahren einer domotischen Anlage (1), die einen Raum ausrüstet und mindestens eine domotische Ausrüstung (10, 15) umfasst, die von einer Steuereinheit (20) gesteuert wird, **dadurch gekennzeichnet, dass** es einen Definitionsschritt eines Gleichgewichtszustands des Raums umfasst, in dem optimale Komfortwerte definiert sind, einen Prognoseschritt der energetischen Auswirkung mindestens einer ersten Aktion der domotischen Ausrüstung auf die Energiebilanz des Raums unter der Hypothese, dass diese Aktion ausgeführt wird, und einen Beratungsschritt, bei dem die Anlage dem Benutzer empfiehlt oder ihm davon abrät, die erste Aktion durchzuführen, wobei die Steuereinheit programmiert ist zu versuchen, den Gleichgewichtszustand bei Minimierung des Energieverbrauchs zu erreichen.

2. Betriebsverfahren nach Anspruch 1, **dadurch gekennzeichnet, dass** der Prognoseschritt eine Bestimmung der Auswirkung der ersten Aktion der domotischen Ausrüstung auf den Energieverbrauch des Raums umfasst.

3. Betriebsverfahren nach einem der vorangehenden Ansprüche, **dadurch gekennzeichnet, dass** es einen Informationsschritt umfasst, bei dem die Anlage über die energetische Auswirkung der ersten Aktion auf die Energiebilanz des Raums informiert.

4. Betriebsverfahren nach Anspruch 3, **dadurch gekennzeichnet, dass** der Informationsschritt eine grafische Wiedergabe der energetischen Auswirkung der ersten Aktion, eventuell begleitet von einer Information, die die positive oder negative Natur der energetischen Auswirkung der ersten Aktion übersetzt, umfasst.

5. Betriebsverfahren nach Anspruch 3 oder 4, **dadurch gekennzeichnet, dass** der Informationsschritt eine Information über den energetischen Gewinn und/oder den finanziellen Gewinn im Verhältnis zur Durchführung der ersten Aktion umfasst.

6. Betriebsverfahren nach einem der Ansprüche 3 bis 5, **dadurch gekennzeichnet, dass** der Informationsschritt eine Information, eventuell in grafischer Form, der energetischen Gewinne und Verluste des Raums in einem bestimmten Zeitraum umfasst.

7. Betriebsverfahren nach einem der vorangehenden Ansprüche, **dadurch gekennzeichnet**, es einen Prognoseschritt der energetischen Auswirkungen mehrerer Aktionen der domotischen Ausrüstung oder mehrerer domotischer Ausrüstungen auf die Energiebilanz des Raums umfasst unter den Hypothesen, dass diese Aktionen individuell oder in Kombination durchgeführt werden.

8. Betriebsverfahren nach vorangehendem Anspruch, **dadurch gekennzeichnet, dass** es einen Beratungsschritt umfasst, bei dem die Anlage dem Benutzer empfiehlt oder ihm davon abrät, eine oder mehrere Aktionen oder Kombinationen von Aktionen durchzuführen.

9. Betriebsverfahren nach einem der vorangehenden Ansprüche, **dadurch gekennzeichnet, dass** der Beratungsschritt eine automatische Lernphase der Gewohnheiten des Benutzers integriert und vergangene Reaktionen des Benutzers auf empfohlene Aktionen berücksichtigt.

10. Betriebsverfahren nach einem der vorangehenden Ansprüche, **dadurch gekennzeichnet, dass** der Prognoseschritt einer Sendung eines Durchführungsauftrags der ersten Aktion folgt.

11. Betriebsverfahren nach vorangehendem Anspruch, **dadurch gekennzeichnet, dass** der Durchführungsauftrag der ersten Aktion nicht berücksichtigt wird, wenn vorgesehen ist, dass die erste Aktion zu einem Energieverbrauch über einer vorbestimmten Stufe führt.

12. Betriebsverfahren nach einem der vorangehenden Ansprüche, **dadurch gekennzeichnet, dass** es einen vorherigen Konfigurationsschritt umfasst, bei dem Daten, die sich auf den Raum, die Ausrüstung oder die Ausrüstungen und auf die aktive oder passive energetische Auswirkung dieser Ausrüstung(en) beziehen, von einem Installateur registriert und/oder automatisch gelernt werden.

13. Betriebsverfahren nach vorangehendem Anspruch, **dadurch gekennzeichnet, dass** der vorherige Konfigurationsschritt eine Phase der Registrierung optimaler Werte von Komfortparametern umfasst.

14. Domotische Anlage (1), die einen Raum ausrüstet und mindestens eine domotische Ausrüstung (15, 20) umfasst, die von einer Steuereinheit (20) gesteuert wird, **dadurch gekennzeichnet, dass** sie Hardware (20a, 20b, 20c, 30, 40) und Software zur Umsetzung des Betriebsverfahrens nach einem der vorangehenden Ansprüche umfasst.

15. Domotische Anlage nach Anspruch 14, **dadurch gekennzeichnet, dass** sie eine Gruppe von Sensoren (40) umfasst, wobei die domotische Ausrüstung oder die Ausrüstungen, die Steuereinheit und die Sensorengruppe untereinander derart kommunizieren, dass Informationen ausgetauscht und/oder Steuerbefehle übermittelt werden, wobei die Steuereinheit ferner mit einer Mensch-Maschine-Schnittstelle (30) ausgestattet ist.
